(19) Europäisches Patentamt

European Patent Office

Office européen des brevets

(11) EP 0 818 094 B1

(12) FASCICULE DE BREVET EUROPEEN

(45) Date de publication et mention
de la délivrance du brevet:
**22.02.2006 Bulletin 2006/08**

(51) Int Cl.:
*H04L 9/30* (2006.01)    *H04L 9/32* (2006.01)

(21) Numéro de dépôt: **97901663.1**

(22) Date de dépôt: **24.01.1997**

(86) Numéro de dépôt international:
**PCT/FR1997/000139**

(87) Numéro de publication internationale:
**WO 1997/027688 (31.07.1997 Gazette 1997/33)**

(54) **PROCEDE DE COMMUNICATION CRYPTOGRAPHIQUE ASYMETRIQUE, ET OBJET PORTATIF ASSOCIE**

VERFAHREN ZUR UNSYMMETRISCHEN KRYPTOGRAPHISCHEN KOMMUNIKATION UND ZUGEHÖRIGER TRAGBARER GEGENSTAND

ASYMMETRICAL CRYPTOGRAPHIC COMMUNICATION METHOD AND PORTABLE OBJECT THEREFOR

(84) Etats contractants désignés:
**BE CH DE DK ES FI FR GB IE IT LI NL PT SE**

(30) Priorité: **26.01.1996 FR 9600958**

(43) Date de publication de la demande:
**14.01.1998 Bulletin 1998/03**

(73) Titulaire: **CP8 TECHNOLOGIES**
**78431 Louveciennes (FR)**

(72) Inventeur: **PATARIN, Jacques**
**F-78220 Viroflay (FR)**

(74) Mandataire: **Renault, Patricia Marie Jacqueline et**
**al**
**Axalto SA**
**Direction Propriété Intellectuelle**
**36-38, rue de la Princesse**
**B.P. 45**
**78431 Louveciennes Cedex (FR)**

(56) Documents cités:
- **ADVANCES IN CRYPTOLOGY - EUROCRYPT '88. WORKSHOP ON THE THEORY AND APPLICATION OF CRYPTOGRAPHIC TECHNIQUES. PROCEEDINGS, DAVOS, SWITZERLAND, 25-27 MAY 1988, ISBN 3-540-50251-3, 1988, BERLIN, WEST GERMANY, SPRINGER-VERLAG, WEST GERMANY, pages 419-453, XP000568374 MATSUMOTO T ET AL: "Public quadratic polynomial-tuples for efficient signature-verification and message-encryption" cité dans la demande**
- **ADVANCES IN CRYPTOLOGY - CRYPTO '95. 15TH ANNUAL INTERNATIONAL CRYPTOLOGY CONFERENCE. PROCEEDINGS, PROCEEDINGS OF CRYPTO '95: 15TH ANNUAL CRYPTO CONFERENCE, SANTA BARBARA, CA, USA, 27-31 AUG. 1995, ISBN 3-540-60221-6, 1995, BERLIN, GERMANY, SPRINGER-VERLAG, GERMANY, pages 248-261, XP000605562 PATARIN J: "Cryptanalysis of the Matsumoto and Imai public key scheme of Eurocrypt'88" cité dans la demande**

EP 0 818 094 B1

Printed by Jouve, 75001 PARIS (FR)

**Description**

<u>1. - INTRODUCTION</u>

L'invention concerne un procédé de communication cryptographique asymétrique pour traiter des messages et sécuriser des communications entre des interlocuteurs. Il peut être utilisé pour chiffrer des messages de façon asymétrique, ou pour les signer de façon asymétrique également. Il peut aussi être utilisé en authentification asymétrique.
Ce procédé utilise deux nouvelles familles d'algorithmes que nous avons appelées "Dragon" et "Chaînes". Ces deux familles peuvent d'ailleurs être combinées.
Ce qui rend ces nouveaux algorithmes particulièrement intéressants est que certains de ses membres sont :

1. facilement mis en oeuvre dans des cartes à puces de puissance modeste ;
2. des bijections "TRAPDOOR ONE WAY", c'est-à-dire des bijections qui sont des fonctions de chiffrement à clé publique ;
3. de plus, des bijections sur des variables très courtes (de 64 ou 128 bits par exemple).

Ces algorithmes "Dragon" et "Chaînes" peuvent être vus comme une "réparation" subtile et efficace d'un algorithme inventé en 1988 par MATSUMOTO et IMAI (Tsutomu Matsumoto and Hideki Imai, "Public quadratic polynomial-tuples for efficient signature-verification and message-encryption", Advances in Cryptology, <u>Eurocrypt'88</u> (Christoph G. Gunther, ed), Lecture Notes in Computer Science, vol 330, Springer-Verlag, 1988, pp. 419-453). Cet algorithme a été cassé en 1995 par Jacques PATARIN (l'attaque est publiée au congrès CRYPTO'95 Springer-Verlag, pp 248-261).
L'invention concerne à cet effet un procédé de communication cryptographique asymétrique établissant une correspondance entre une première valeur (x) représentée par n éléments $(x_1,.....,x_n)$ d'un anneau (A) et une seconde valeur (y) représentée par m éléments $(y_1,.....,y_m)$ de cet anneau, n et m étant des entiers supérieurs ou égaux à 2, caractérisé en ce que :

- ladite correspondance est définie par des polynômes publics multivariables $(P_i)$ de $A^{n+m+k} \to A$, de degré total inférieur ou égal à 6 tels que l'on ait des équations du type $P_i(x_1,.....,x_n ; y_1,.....,y_m ; z_1,........,z_k) = 0$ où $(z_1,......,z_k)$ sont d'éventuelles variables intermédiaires et k est un entier;
- certains desdits polynômes $(P_i)$ définissant la correspondance ne sont pas de la forme $T_i(y_1,.....,y_m) = S_j(x_1,.....,x_n)$, où $S_i$ est un polynôme de degré total 2 et $T_i$ est un polynôme de degré total 1.

L'invention concerne aussi un objet portatif associé, notamment un objet portatif ne stockant pas les polynômes publics multivariables $(P_i)$.
La notion de "valeur x" à transformer selon le procédé de l'invention désigne selon les cas soit un message (par exemple dans l'utilisation du procédé en chiffrement), soit plus généralement une grandeur à partir de laquelle on souhaite effectuer une vérification (par exemple dans l'utilisation du procédé en vérification de signature ou en authentification).
La notion de "petit degré" mentionnée dans la suite doit être comprise comme désignant un degré inférieur ou égal à 6, de préférence inférieur ou égal à 4, mais dans le même temps supérieur ou égal à 2.
D'autres détails et avantages de l'invention apparaîtront au cours de la description suivante de quelques formes de réalisation préférées mais non limitatives, en regard des dessins annexés, sur lesquels :

La figure 1 est un schéma illustrant l'enchaînement des transformations utilisées pour traiter un message, selon une première variante du procédé de l'invention, uitlisé en chiffrement ; et

La figure 2 illustre un exemple de système de chiffrement / déchiffrement utilisant le procédé de communication cryptographique selon l'invention.

<u>2. - ALGORITHME "DRAGON"</u>

<u>2.1. - L'idée fondamentale des "Dragons".</u>

Nous avons appelé "Dragons" une première famille d'algorithmes basés sur l'invention. Présentons dès maintenant l'idée fondamentale qui distingue les deux familles d'algorithmes "Dragon" et "Matsumoto - Imai". Puis, dans les paragraphes suivants, nous verrons quelques exemples particulièrement intéressants de "Dragons". Enfin, nous décrirons une autre famille d'algorithmes basés sur l'invention, et que nous avons appelée "Chaînes".

Pour MATSUMOTO - IMAI

La forme publique se présente sous la forme de n polynômes multivariables sur un corps fini K, donnant une valeur image y constituée d'une pluralité de valeurs image élémentaires $y_1$, ..., $y_n$ en fonction d'une valeur x constituée d'une pluralité de valeurs élémentaires $x_1$, ..., $x_n$ sous la forme :

$$y_1 = P_1(x_1, ..., x_n)$$
$$y_2 = P_2(x_1, ..., x_n)$$
$$\vdots \qquad \qquad \vdots$$
$$y_n = P_n(x_1, ..., x_n)$$

où $P_1$, $P_2$, ... $P_n$ sont des polynômes de $K[X_1, ...., X_n]$, c'est-à-dire des polynômes de $K^n \rightarrow K$, ces polynômes étant de degré total 2.

Pour les Dragons

La forme publique se présente sous la forme de $\lambda$ polynômes multivariables sur un corps K (ou un anneau), faisant intervenir les variables $y_1$, $y_2$, ...., $y_m$ et $x_1$, $x_2$, ...., $x_n$ de K sous la forme :

$$P_1(x_1, x_2, ..., x_n, y_1, y_2, ..., y_m) = 0$$
$$P_2(x_1, x_2, ..., x_n, y_1, y_2, ..., y_m) = 0$$
$$\vdots \qquad \qquad \vdots$$
$$P_\lambda(x_1, x_2, ..., x_n, y_1, y_2, ..., y_m) = 0$$

où $P_1$, $P_2$, ....$P_\lambda$ sont des polynômes de $K^n \times K^m \rightarrow K$, de degré total petit (par exemple 2).
Ainsi, la différence fondamentale entre les Dragons et les algorithmes de MATSUMOTO-IMAI réside dans le fait que, dans la forme publique, on a "mélangé" les variables $x_i$ et $y_j$.

2.2 - Premier exemple: le « Petit Dragon ».

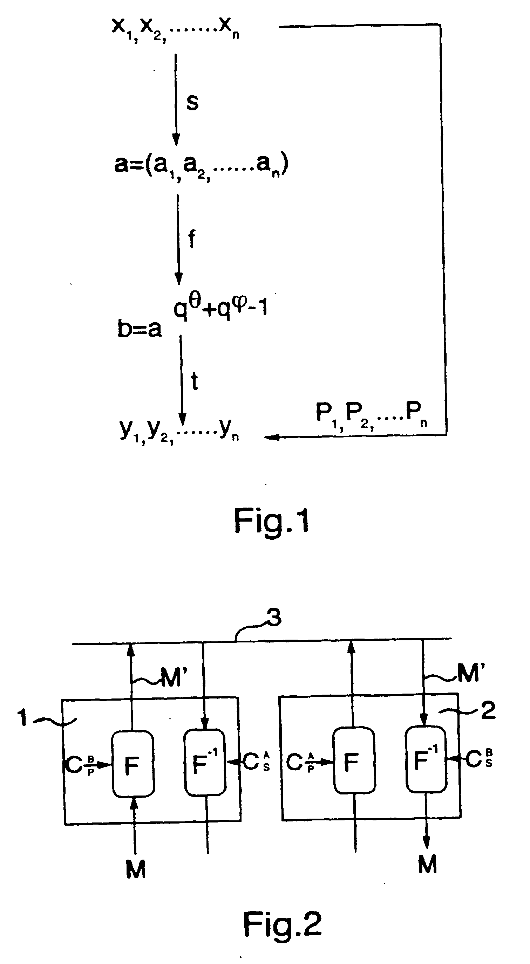

Nous allons tout d'abord donner ici un premier exemple assez simple « d'algorithme Dragon ». Cet exemple illustre bien la notion d'algorithmes Dragon mais malheureusement cet algorithme n'est pas cryptographiquement très sécuritaire, comme l'auteur l'a montré dans l'article « Asymmetric Cryptography with a Hidden Monomial » (LNCS 1109, Crypto'96, Springer, pages 45 à 60). Puis, aux paragraphes 2.3, 2.4, 2.5 et 2.6, nous verrons d'autres exemples d'algorithmes Dragons, pour lesquels on ne connaît cette fois pas d'attaque générale.
Ici, $\lambda = m = n$, et K est un petit corps fini (par exemple, $K = F_2$, le corps à deux éléments). On note q = IKI le nombre d'éléments de K.
Si x =( $x_1$,..., $x_n$ ), est une valeur constituée dans cet exemple par un message clair, et y = ($y_1$,..., $y_n$), le message chiffré correspondant, le passage de $x_1$,..., $x_n$ à $y_1$,..., $y_n$ peut être calculé comme représenté sur la figure 1 :

1) On applique à x = ( $x_1$,..., $x_n$) une première transformation affine bijective secrète s, obtenant ainsi une image a = s (x) = ($a_1$,..., $a_n$).

2) On applique à (a) une transformation f, publique ou secrète, donnant une image b = f(a) = $a^{q^\theta + q^\varphi - 1}$, où $\theta$ et $\varphi$ sont des entiers publics ou secrets tels que h = $q^\theta + q^\varphi - 1$ soit premier avec $q^n - 1$ et où l'on se place, pour effectuer l'élévation à la puissance h, dans un représentant du corps (noté en général Fqn) à $q^n$ éléments.

3) On transforme enfin b = $(b_1,..., b_n)$ en y = $(y_1,..., y_n)$ en appliquant à b une seconde transformation secrète affine bijective t telle que y = t(b).

Toutes ces opérations étant inversibles, on peut donc aussi calculer $(x_1,..., x_n)$ à partir de $(y_1,..., y_n)$ si l'on connaît les secrets t et s. Par exemple, b = $a^h$ sera inversé par a = $b^{h'}$, où h' est un entier tel que h.h' = 1 modulo $q^n$-1 , où (.) est le symbole de l'opération de multiplication.

De plus, comme b = $a^\theta$ + $q^\varphi$ - 1, on en déduit que b.a = $a^\theta$ + $q^\varphi$ , donc que dans une base où a = $(a_1,...., a_n)$ et b = $(b_1, ..., b_n)$, il existe n équations de la forme:

$$\Sigma\Sigma\gamma_{ij}.b_i.a_j \; = \; \Sigma\Sigma\delta_{ij}.a_i.a_j \qquad\qquad (1)$$

Donc, en exprimant les $b_i$ en fonction des $y_i$, et les $a_i$ en fonction des $x_i$, on constate qu'il existe n équations de la forme :

$$\Sigma\Sigma\mu_{ij}\, y_i.x_j = \; \Sigma\Sigma\nu_{ij}\, x_i.x_j \; + \; \Sigma\beta_i\, y_i \; + \Sigma\alpha_i\, x_i \; + \; \delta_0 \qquad (2)$$

c'est-à-dire n équations de la forme :

Pi $(x_1,...,x_n, y_1,...y_n)$ = 0, i = 1...n, où $P_i$ est un polynôme de $K^{2n} \to K$, de degré total 2.

Ces n équations $P_i$ sont rendues publiques. Elles constituent la clé publique.

En effet, grâce à elles, quiconque va pouvoir chiffrer un message, c'est-à-dire calculer $y_1,...,y_n$ à partir de $x_1,..., x_n$ sans connaître de secrets, de la façon suivante. En remplaçant $x_1,..., x_n$ par leurs valeurs et en reportant ces valeurs dans les équations (2),on obtient n équations de degré 1 en les $y_i$.

Par réduction de GAUSS, on obtient alors facilement toutes les solutions de ces n équations. Or , si a $\neq$ 0 (ce qui est toujours le cas sauf pour un x exceptionnel), on n'a qu'une seule solution en b de b. a = $a^\theta$ + $q^\varphi$, donc on aura une seule solution après réduction de GAUSS : ce sera le message chiffré $(y_1 ,..., y_n)$ à envoyer.

Le petit Dragon en signature.

Il est facile d'utiliser l'algorithme du Petit Dragon en signature : par exemple, si $y_1,..., y_n$ est, soit le message à signer, soit un "hash" du message à signer (c'est-à-dire le résultat d'une fonction de hachage appliquée au message), soit une fonction publique du message à signer, alors $x_1,..., x_n$ sera la signature.

Et on vérifiera la signature en vérifiant que l'on a :

$$\forall i, \; 1 \le i \le n, \quad P_i(x_1,..., x_n, y_1,..., y_n) = 0$$

c'est-à-dire en vérifiant que toutes les équations publiques (2) sont satisfaites.

2.3. Exemples de Dragons plus généraux, avec une transformation « monôme »

Ici, $\lambda$ = m = n, et K est un petit corps fini (par exemple, K = $F_2$ , le corps à deux éléments). On note q = IKI le nombre d'éléments de K.

Si x = $(x_1,..., x_n)$, est une valeur constituée dans cet exemple par un message clair, et y = $(y_1,..., y_n)$, le message chiffré correspondant, le passage de $x_1,..., x_n$ à $y_1,.., y_n$ peut être calculé ainsi si on dispose des secrets (nous verrons plus bas comment calculer y à partir de x sans les secrets) :

1) On applique à x = $(x_1..., x_n)$ une première transformation affine bijective secrète s, obtenant ainsi une image a = s (x) = $(a_1...., a_n)$.

2) On applique à (a) une transformation f, publique ou secrète, donnant une image b = f(a) telle que :

$$a \wedge ( q^{\theta} + q^{\varphi} ) \cdot M(b) = a \wedge (q^{\zeta} + q^{\xi}) \cdot N(b) \quad (1)$$

où $\theta$, $\varphi$, et $\zeta$, $\xi$ sont des entiers publics ou secrets tels que $h = q^{\theta} + q^{\varphi} - q^{\zeta} - q^{\zeta}$ soit premier avec $q^n - 1$ et où l'on se place, pour effectuer les élévations à la puissance , dans un représentant du corps (noté en général Fqn) à $q^n$ éléments, et où M et N sont des fonctions affines secrètes ou publiques. (m et n sont a priori secrètes mais, si elles sont publiques, il faut alors les choisir particulièrement soigneusement pour éviter certaines attaques). Le symbole ($\wedge$) représente la fonction puissance.

Comment calculer b à partir de a ? Nous allons maintenant voir par une méthode générale que c'est toujours possible mais, pour certaines fonctions M et N particulières, il peut exister des méthodes plus performantes que la méthode générale que nous allons maintenant présenter.

Si on écrit l'équation (1) en les composantes $(a_1,...a_n)$ et $(b_1,...b_n)$ de a et b (c.à.d. dans une base de Fqn), nous obtenons n équations de la forme :

$$\sum \gamma_{ijk} \, a_i a_j b_k + \sum \mu_{ijk} \, a_i a_j = 0 \quad (2)$$

où $\gamma_{ijk}$ et $\mu_{ij}$ sont des coefficients de K. Ceci vient du fait que les fonctions qui, à x, associent $X \wedge (q^{\theta})$ et qui, à x, associent $x \wedge (q^{\varphi})$ sont des fonctions linéaires de $F_q n$, donc les fonctions qui, à x, associent $x \wedge (q^{\theta} + q^{\varphi})$ et qui, à x, associent $x \wedge (q^{\zeta} + q^{\zeta})$ sont données dans une base par des polynomes de degré total 2.

Maintenant, lorsque a est donné, à partir des n équations (2) on obtient n équations de degré 1 en les valeurs $b_i$. Donc par réduction de Gauss il est alors facile de trouver les solutions de ces équations. Nous supposerons qu'au moins une solution b est trouvée telle que $M(b) \neq 0$ ou $N(b) \neq 0$. Si plus d'une solution est trouvée, on choisit aléatoirement une des solutions pour b.

3) On transforme enfin $b = (b_1,..., b_n)$ en $y = (y_1, .... y_n)$ en appliquant à b une seconde transformation secrète affine bijective t telle que $y = t(b)$.

Toutes ces opérations étant inversibles, on peut donc aussi calculer $(x_1,..., x_n)$ à partir de $(y_1,..., y_n)$ si l'on connaît les secrets t et s. Par exemple, si $M(b) \neq 0$, alors a sera trouvé à partir de b par : $a = (N(b) / M(b))^{h'}$ où h' est l'inverse de :

$$h = q^{\theta} + q^{\varphi} - q^{\zeta} - q^{\xi} \;\; modulo \;\; q^n - 1.$$

**Calcul public de $(y_1,...y_n)$ à partir de $(x_1,...x_n)$** :
Les n équations (2) vont être transformées en un système de n équations de la forme suivante :

$$\sum \alpha_{ijk} x_i x_j y_k + \sum \beta_{ij} x_i x_j + \sum \nu_{ij} x_i y_j + \sum \varepsilon_i x_i + \sum \zeta_i y_i + \delta_0 = 0 \quad (3)$$

c'est-à-dire n équations $P_i(x_1,...,x_n y_1,...y_n) = 0$, $i =_{1...n}$, où $P_i$ est un polynome de $K^{2n}$ vers K de degré total 3.

Ces n équations (3) seront publiques. Elles constituent la clé publique. Au moyen de ces équations (3), et par réduction de Gauss, il est possible de calculer toutes les solutions $(y_1,...y_n)$ à partir de $(x_1,...x_n)$ sans aucun secret.
On obtient ces n équations (3) à partir des n équations (2) en les deux étapes suivantes :

Etape 1 : on remplace les variables $b_i$ par leurs expressions affines en les variables $y_j$ et on remplace les variables $a_i$ par leurs expressions affines en les variables $x_j$.
Etape 2 : Alors on applique une transformation bijective, affine et secrète sur ces équations.

<u>2.4.. - Un exemple en signature avec $m \neq n$.</u>

Présentons un exemple, utilisable en signature, avec $m \neq n$.
Notons comme d'habitude $y = (y_1.y_2,.., y_m)$ un hash du message à signer, (ou le message à signer).
Soient $Q_1,...,Q_n$ et.. $Q'_1,...,Q'_n$ , 2n polynômes multivariables secrets de degré total 2 de $K^n \rightarrow K$.

Soit b = t$^{-1}$ (y), où t est une bijection affine secrète de K$^m$ → K$^m$ ; b = (b$_1$,b$_2$,.., b$_m$).
Notons B l'élément de K$^n$ dont les composantes sont :

$$B = (Q_1(b_1, b_2,....,b_m), \ Q_2 \ (b_1, b_2,....,b_m),...., Q_n \ (b_1, b_2,....,b_m)).$$

Et notons B' l'élément de k$^n$ dont les composantes sont :

$$B' = (Q'_1(b_1, b_2,....,b_m), \ Q'_2 \ (b_1, b_2,....,b_n),...., Q'_n \ (b_1, b_2,....,b_m)).$$

On peut considérer que B et B' représentent (dans une base) deux éléments du corps Fqn.
Dans ce corps, soit a l'élément tel que :

$$B \ . \ a^{q^{\theta} + q^{\varphi}} = B' \ . \ a^{q^{\theta'} + q^{\varphi'}} \tag{3}$$

a est représenté dans une base par a = (a$_1$,..., a$_n$).
Soit enfin x = s (a), où s est une bijection affine secrète de K$^n$ → K$^n$.
x = (x$_1$, ....,x$_n$) dans une base.
En écrivant l'équation (3) dans une base, et en écrivant les équations en les variables x$_i$ et y$_j$ , on obtient n équations, de degré total 4, en les variables x$_1$,..., x$_n$, y$_1$,..., y$_m$
Ces n équations seront publiques et (x$_1$,..., x$_n$) sera une signature valide de (y$_1$,..., y$_m$) si et seulement si toutes ces n équations sont vérifiées. Pour calculer une signature avec les secrets, il suffit de calculer b, puis B et B', puis a à partir de (3), et enfin x par x = s (a).

2.5. Exemples de Dragons plus généraux, avec une transformation « polynôme non monôme »

Gardons les mêmes notations que précédemment. En chiffrement, x désigne toujours le message clair et y le message chiffré (en signature, x est la signature et y une transformation publique du message à signer, par exemple y est Hash(M) où Hash est une fonction de Hachage).
Notons toujours a = s(x) la transformation de x par une bijection affine secrète s, et b la transformation de y par une transformation affine secrète (y = t(b)) . a est considéré comme étant un élément du corps K$_1$ à q$^n$ éléments (K1 = F$_q$n) et b comme étant un élément du corps K$_2$ à q$^m$ éléments (K2 = F$_q$ m).
Nous allons maintenant introduire un exemple où le passage de a à b est un peu plus général qu'auparavant.
Soient k et k' deux entiers, et soient N$_i$, 1 <=i<=k, et N'$_i$ , 1 <=i<=k' des fonctions affines secrètes de K$_2$ vers K$_1$ (« affine » signifie comme auparavant que ces fonctions sont affines lorsque K$_2$ et K$_1$ sont considérés comme des espaces vectoriels sur le corps K à q éléments) ; par ailleurs, le symbole (<=) signifie « inférieur ou égal ».
Enfin, pour tout élément a de K$_1$ et tout élément b de K$_2$, notons

$$f(a,b) = \sum \alpha_i a^{\wedge}(q^{\beta}i + q^{\gamma}i).N_i(b) + \sum \alpha'_i \ a^{\wedge}(q^{\beta'}i).N_i'(b) + \delta_0,$$

où, dans la première somme $\sum$, l'indice i varie de 1 à k, et, dans la seconde somme $\sum$, l'indice i varie de 1 à k'.
Notons d le degré en a de ce polynôme. Or on connaît des algorithmes pour trouver les solutions a de l'équation f(a,b) = 0 lorsque d n'est pas trop grand (disons d <= 8000) par exemple. De plus f(a,b) a été construit de façon à s'exprimer dans une base sous la forme d'équations polynomiales de degré total 3 (degré total 2 en les variables a$_i$ , et 1 en les variables b$_j$). Comme auparavant, on écrira ces équations en remplaçant les variables a$_i$ par leurs expressions affines en les variables x$_j$ et en remplaçant les variables b$_i$ par leurs expressions affines en les variables y$_j$. Puis on effectuera une transformation bijective affine secrète u sur le système d'équations obtenu et le système alors obtenu est rendu public : c'est la clé publique. Cette clé publique est donc constituée d'équations de degré total 3 (degré total 2 en les variables x$_i$ et 1 en les variables y$_i$). A partir de ces équations publiques, il est possible, par réduction de Gausss, de

calculer les solutions $y_i$ correspondant à un x donné. Par contre, l'opération inverse (calculer x à partir de y) nécessite de connaître les secrets.

2.6. « Dragons incomplets ».

Dans tous les exemples d'algorithmes « Dragons » que nous avons donnés en chiffrement, si l'on introduit de la redondance dans le message x, l'algorithme de redondance étant public, il est alors possible de ne pas publier toutes les équations qui étaient les équations publiques, c'est-à-dire d'en garder un petit nombre secret. Ceci peut en effet parfois renforcer la solidité de l'algorithme. La bonne valeur de x sera alors trouvée grâce à la redondance publique. De même en signature il est possible de ne pas publier toutes les équations qui étaient précédemment appelées équations publiques: la vérification de signature se fera alors sur moins d'équations.

On peut imaginer bien d'autres exemples d'algorithmes « Dragon ». Il faut cependant prendre garde au fait que certaines variantes sont cryptographiquement faibles : dans l'article « Asymmetric Cryptography with a Hidden Monomial » (LNCS 1109, Crypto'96, Springer, pages 45 à 60) l'auteur a présenté certaines attaques sur certaines variantes faibles.

3. - ALGORITHME "CHAINES".

3.1. - L'idée fondamentale des "chaînes".

L'idée fondamentale des « chaînes » par rapport à MATSUMOTO-IMAI, est d'introduire des variables intermédiaires $z_i$, $1 \leq i \leq k$, c'est-à-dire d'avoir des polynômes publics $P_i$ qui dépendent non seulement des variables habituelles $x_i$ et $y_i$ (où les $x_i$ représentent le message à chiffrer et les $y_i$ le message chiffré en chiffrement, ou bien les $x_i$ représentent la signature des $y_i$ en signature) mais aussi des variables intermédiaires $z_i$.

3.2. -Premier exemple: « Petites Chaînes »

Nous allons tout d'abord donner ici quelques premiers exemples assez simples « d'Algorithme Chaînes ». Ces exemples illustrent bien la notion d'Algorithmes Chaînes mais malheureusement ces premiers exemples d'algorithme ne sont pas cryptographiquement très sécuritaires. En effet, il est possible de généraliser certaines attaques de l'article « Asymmetric Cryptography with a Hidden Monomial » (LNCS 1109, Crypto'96, Springer, pages 45 à 60) à ces exemples.

Puis, au paragraphe 3.5, nous verrons d'autres exemples d'Algorithmes Chaînes, pour lesquels on ne connaît cette fois pas d'attaque générale.

Par exemple, soient a, b, c, d quatre éléments du corps à $q^n$ éléments et soient quatre entiers $\theta$, $\varphi$, $\alpha$, et $\beta$ tels que :

$$c = a^{1+q^{\theta}} \qquad (1)$$

$$d = a^{1+q^{\varphi}} \qquad (2)$$

et

$$b = c^{q^{\alpha}} \times d^{q^{\beta}} \qquad (3)$$

alors $b = a^h$ où $h = q^{\alpha} + q^{\alpha+\theta} + q^{\beta} + q^{\beta+\varphi}$. Nous supposerons que $\theta$, $\varphi$, $\alpha$, et $\beta$ ont été choisis de telle sorte que h soit premier avec $q^n-1$.

Maintenant, supposons que $x = s(a)$ et $y = t(b)$, où s et t sont des fonctions bijectives affines secrètes. Et notons $z = u(c)$, et $z' = v(d)$, où u et v sont des fonctions affines secrètes.

De (1), on déduit qu'il existe n relations de la forme :

$$z_i = \Sigma\Sigma\gamma_{ij}.x_i.x_j + \Sigma\alpha_i.x_i + \delta_0 \qquad (1')$$

De (2), on déduit de même l'existence de n relations de la forme :

$$z'_i = \Sigma\Sigma\gamma'_{ij}.x_i.x_j + \Sigma\alpha'_i.x_i + \delta'_0 \qquad (2')$$

De même de (3) on déduit l'existence de n relations de la forme:

$$y_i = \Sigma\Sigma\gamma''_{ij}.z_i.z'_j + \Sigma\alpha''_i.z_i + \Sigma\beta_i''.z'_i + \delta''_0 \qquad (3')$$

Supposons maintenant que les 3 x n équations (1'), (2') et (3') sont publiques. Alors, si x est le message à chiffrer, de (1') on va obtenir les $z_i$, de (2') on va obtenir les $z'_i$, puis de (3') on va obtenir les $y_i$. Donc il est possible de calculer le chiffré y à partir de x et des polynômes publics.

Par contre, si y est connu mais que x est inconnu, il semble qu'il ne soit pas toujours possible de remonter à x à partir de y. En effet, de (3'), on ne remonte qu'à n équations pour $2 \times n$ variables $z_i$ et $z'_i$, et donc les $z_i$ et $z'_i$ restent inconnues.

Par contre, si les clés secrètes s et t sont connues, on peut calculer $b = t^{-1}(y)$ à partir de y , puis $a = b^{h'}$, où h' est l'inverse de h modulo $q^{n}-1$, puis enfin $x = s(a)$. Ainsi, avec la clé secrète, on peut déchiffrer les messages.

3.3. -Deuxième exemple: petites chaînes avec Dragon.

Gardons les mêmes notations qu'au paragraphe précédent, mais supposons maintenant que :

$$c = a^{q^{\theta}+q^{\varphi}-1} \qquad (1)$$

$$d = a^{q^{\theta'}+q^{\varphi'}-1} \qquad (2),$$

et

$$c^{q^{\alpha}} \times b = d^{q^{\beta}} \times b^{q^{\gamma}} \qquad (3)$$

où $\theta$, $\varphi$, $\theta'$, $\varphi'$, $\alpha$, $\beta$ et $\gamma$ sont des entiers. Alors, de même, $b = a^{\mu}$ pour un $\mu$ particulier et on choisira $\theta$, $\varphi$, $\alpha$, $\theta'$, $\varphi'$, $\alpha$, $\beta$ et $\gamma$ de telle sorte que $\mu$ soit premier avec $q^{n}-1$. L'algorithme marchera alors exactement de la même façon, mais cette fois les équations publiques (1') sont de la forme :

$$\Sigma\Sigma\gamma_{ij}.z_i.x_j + \Sigma\Sigma\gamma'_{ij}.x_i.x_j + \Sigma\alpha_i.x_i + \Sigma\beta_i.z_i + \delta_0 = 0 \qquad (1')$$

et les équations publiques (2') sont de la forme :

$$\Sigma\Sigma\mu_{ij}.z'_i.x_j \;+\; \Sigma\Sigma\mu'_{ij}.x_i.x_j \;+\; \Sigma\alpha'_i.x_i \;+\; \Sigma\beta'_i.z'_i \;+\; \delta'_0 \;=\; 0 \quad (2')$$

Si x est le message à chiffrer, de (1') on va obtenir par réduction de GAUSS les $z_i$, de (2') on va obtenir par réduction de GAUSS les $z'_i$, et de (3') on va obtenir les $y_i$ .

### 3.4 - Utilisation des chaînes en signature

Les exemples des paragraphes 3.2 et 3.3, donnés en chiffrement, sont aussi utilisables en signature. x représente alors la signature associée à y. ,et la vérification de signature consiste à vérifier qu'il existe bien des variables $z_i$ et $z'_i$ satisfaisant (1'), (2') et (3').

### 3.5. - Chaînes plus générales

En clé publique, dans les exemples des paragraphes 3.2., et 3.3, on obtenait, à partir de x ,les variables intermédiaires z et z', puis de z et z' on obtenait y. On peut imaginer des chaînes plus longues.

Par exemple, à partir des $x_i$ , on pourra obtenir des variables $z_i$. Puis, à partir des variables $x_i$ et $z_i$, on pourra obtenir des variables $z'_i$. Puis, à partir des variables $x_i$, $z_i$, et $z'_i$ , on obtiendra des variables $z''_i$. Puis, finalement, à partir des variables $x_i$, $z_i$, $z'_i$ et $z''_i$,..., on obtiendra y.

Nous allons maintenant donner un tel exemple de chaînes plus général pour lequel on ne connaît aucune attaque.

**Notations.**

x est le texte clair,
y est le chiffré,
s et t sont deux fonctions affines secrètes,
b = t(y),
a = s(x),
k est est un entier, (ce sera le nombre de « maillons » de la chaîne),
a, b, $L_1$, $L_2$,...$L_k$, $M_1$, $M_2$,...$M_k$ sont des éléments de $F_2^n$,
$s_1$, ... $s_k$, $t_1$...$t_k$ sont 2k bijections affines secrètes,

pour tout indice i tel que 1 <=i<=k, on a : $l_i = s_i(L_i)$,
et on a : $m_i = t_i(M_i)$.

**Remarque.**

x, y, $l_1$,...$l_k$, $m_1$,...$m_k$ sont les valeurs qui interviendront dans les équations publiques et a, b, $L_1$, $L_2$,...$L_k$, $M_1$,....$M_k$ seront les valeurs accessibles avec les secrets.

Pour tout indice i, 1 <=i<=k, il existera deux exposants $h_i$ et $h'_i$ tels que : $L_i = a^{h_1}$ et $M_i = a^{h'_i}$ (on donnera ci-dessous plus de détails sur $h_i$ et $h'_i$), et il existera un exposant h tel que : $b = a^h$.

Ainsi dans cet exemple les calculs en clé secrète seront faciles :

1. On calculera b = t(y),
2. On calculera a = $b^{h'}$ où hh' = 1 modulo 2n - -1,
3. On calculera enfin x = $s^{-1}$ (a).

Nous allons maintenant décrire ce que sont les équations publiques.

Elles sont de deux sortes : il y a les équations de type « chaînons » (il y en a 2k.n), et elles permettent de passer de x à $l_1$ ou de x à $m_1$ ou de $l_i$ à $l_{i+1}$ ou de $m_i$ à $m_{i+1}$, et il y a les n équations publiques finales qui permettent de passer de ($l_k$, $m_k$) à y.

**Les équations de type « chaînons ».**

Nous allons prendre comme exemple la façon dont on passe de x à $l_1$ ; en effet c'est la même chose pour les autres « chaînons » c'est-à-dire pour passer de $l_i$ à $l_{i+1}$, ou de x à $m_1$, ou de $m_i$ à $m_{i+1}$, , 1 <=i<= k-1.

Il y a quatre entiers secrets, que nous noterons $\alpha$, $\beta$, $\gamma$, $\delta$ tels que :

$$a^{2^\alpha} . L_1^{2^\beta} = a^{2^\gamma} . L_1^{2^\delta} \qquad (C1)$$

De plus on choisit $\alpha$, $\beta$, $\gamma$, $\delta$ tels que :

PGCD($2^\gamma$ - $2^\alpha$, 2" - 1) = 1 et PGCD($2^\delta$ - $2^\beta$, 2" - 1) = 1 (ceci afin d'avoir des transformations bijectives). On rappelle que PGCD signifie « Plus Grand Commun Dénominateur ».

Lorsque (C1) est écrit dans une base avec les composantes $x_i$ de la variable x et les variables l1,i de la variable 11 on obtient n équations de cette forme :

$$\Sigma \, \lambda_{ij} \, x_i \, l_{1,j} + \Sigma \, \xi_i x_i + \Sigma \, \psi_i \, l_{1,i} + \mu_0 = 0 \qquad (C2).$$

Ces n équations (C2) sont publiques (ou plus précisement une transformation linéaire bijective de ces équations est rendue publique).

A partir de ces équations (C2) il est possible, sans aucun secret, de calculer $l_1$ à partir de x , en effectuant des réductions de Gauss.

De même on pourra calculer $l_2$ à partir de $l_1$ puis $l_3$ à partir de $l_2$ etc... jusqu'à $l_k$ à partir de $l_{k-1}$, et donc on pourra calculer $l_k$ à partir de x. De même on pourra calculer $m_k$ à partir de x. On pourra donc calculer, au moyen des 2k.n équations publiques, $l_k$ et $m_k$ à partir de x.

**Les équations publiques terminales.**

Les n équations publiques « terminales » vont maintenant permettre de calculer y à partir de $m_k$ et $l_k$. (Il s'agira ici d'un calcul « à sens unique » c'est-à-dire que à partir de y on ne saura pas sans secrets retrouver $m_k$ et $l_k$). Donnons deux exemples typique d'équations terminales possibles.

**Exemple 1**. On aura :

$$b^{2^{\alpha'}} . L_k^{2^{\beta'}} = b^{2^{\alpha''}} . M_k^{2^{\delta''}}, \qquad (C3)$$

où $\alpha'$, $\beta'$, $\alpha''$ et $\beta''$ sont des entiers secrets.

**Exemple 2.** On aura :

$$b . M_k = L_k^{2^\theta + 2^\varphi} \qquad (C4)$$

où $\theta$ et $\varphi$ sont des entiers secrets.

Cette équation ( (C3) ou (C4) ) sera écrite dans une base avec les variables $y_i$, $M_{k,i}$ et $l_{k,i}$. On obtient ainsi n équations. Une transformation linéaire et bijective de ces n équations est rendue publique, ce qui permet de calculer (par réduction de Gauss) y à partir de $l_k$ et $m_k$.

Ainsi il sera possible, à partir des équations publiques, de calculer y à partir de x, comme voulu.

4. - UNE METHODE POUR REDUIRE LA TAILLE DES CLES PUBLIQUES.

Les fonctions affines secrètes s et t qui interviennent dans les algorithmes Dragon et Chaînes ont des coefficients à valeur dans le même anneau A que les variables qui interviennent. Cependant, il est parfois intéressant de se restreindre à des coefficients dans un sous-anneau A' de A, car alors les polynômes publics pourront avoir des coefficients eux-mêmes dans un sous-anneau A'' de A, ce qui permet de réduire le nombre de bits nécessaires à la description de ces polynômes publics. Cette technique est particulièrement appropriée aux exemples donnés ci-dessus.

### 5. - UN MOYEN DE NE PAS STOCKER LES POLYNOMES $P_i$

Dans une carte à puce capable de calculer les valeurs (y) à partir de (x), et éventuellement (x) à partir de (y), il n'est pas toujours obligatoire que la carte stocke tous les polynômes publics $P_i$. En effet, ces polynômes étant de degré total petit, la carte pourra fournir des valeurs (x), et (y) correspondant à (x), à partir desquelles il est possible de recalculer les polynômes publics $P_i$ à l'extérieur.

Plus généralement, elle pourra fournir des valeurs qui permettent de recalculer les polynômes publics $P_i$, ces valeurs étant éventuellement signées, ou les polynômes publics à trouver étant signés, et cette signature (et non tous les polynômes publics) étant stockée dans la carte.

### 6. - SYSTEME DE CHIFFREMENT / DECHIFFREMENT UTILISANT LE PROCEDE DE L'INVENTION

La figure 2 illustre de façon schématique un exemple de système de chiffrement / déchiffrement connu en soi et utilisant le procédé de communication cryptographique décrit ci-dessus.

Soient deux individus A et B appartenant à un même réseau de communication, chacun possédant un dispositif respectif 1,2 d'émission/réception de messages. Ce dispositif inclut des moyens de calcul, par exemple un ordinateur, agencés pour effectuer un chiffrement / déchiffrement des messages, et des moyens de mémorisation. Au moins une partie de ces moyens de calcul ou de mémorisation peut se trouver dans un objet portatif incorporant un microprocesseur ou des circuits logiques microcablés définissant des zones dont l'accès est contrôlé et peuvent donc renfermer des informations secrètes telles que des clés cryptographiques (voir par exemple l'objet portatif décrit dans le brevet américain N°4.211.919).

Chaque dispositif incorpore un algorithme F tel que décrit précédemment, notamment sous la forme d'un programme, ainsi que l'algorithme inverse $F^{-1}$. Les deux dispositifs sont reliés entre eux au moyen d'une ligne de communication 3.

Les deux individus A et B possèdent respectivement un couple de clés : une clé publique $Cp^A$ et $Cp^B$ et une clé secrète $Cs^A$ et $Cs^B$ corrélée à la clé publique correspondante $Cp^A$ ou $Cp^B$.

L'individu A envoie à B sa clé publique $Cp^A$ et éventuellement une signature de cette clé publique, et, B envoie à A sa clé publique $Cp^B$ et éventuellement, une signature de cette clé publique. Une fois que A a reçu la clé publique $Cp^B$, il va l'utiliser pour chiffrer, à l'aide de l'algorithme cryptographique F, un message M qu'il désire envoyer à B, en un message M'. Ce message, une fois reçu par B, est déchiffré à l'aide de l'algorithme cryptographique $F^{-1}$ et de la clé secrète $Cs^B$.

### Revendications

1.  Procédé de communication cryptographique asymétrique entre deux individus A et B appartenant à un même réseau de communication, chacun possédant un dispositif respectif (1, 2) d'émission/réception de messages, établissant une correspondance entre une première valeur x représentée par n éléments x1 ,.... ,xn d'un anneau A et une seconde valeur y représentée par m éléments y1,...., ym de cet anneau, n et m étant des entiers supérieurs ou égaux à 2, **caractérisé en ce que**:

    - ladite correspondance est définie par des polynômes publics multivariables (Pi) de $A^{n+m+k} \rightarrow A$, de degré total inférieur ou égal à 6, tels que l'on ait des équations du type Pi(x1,....,xn ; y1,.....,ym ; z1,....,zk) = 0 où z1,....,zk sont d'éventuelles variables intermédiaires et k est un entier;
    - certains desdits polynômes Pi définissant la correspondance sont tels que la relation Ti(y1,....,ym) = Si(x1,...., xn) n'est pas vérifiée, où Si est un polynôme de degré total 2 et Ti est un polynôme de degré total 1.

2.  Procédé selon la revendication 1, dans lequel certains polynômes Pi ne sont pas de la forme Ti(y1,....,ym) = Si (x1,....,xn) ,où les Si seraient des polynômes de degré total inférieur ou égal à 6 et les Ti seraient des polynômes de degré total 1.

3.  Procédé selon la revendication 1, dans lequel les polynômes publics multivariables Pi sont de la forme Pi(x1,....,xn; y1,.....,ym) = 0 ,certains polynômes Pi étant tels qu'il existe un entier j , compris entre 1 et n, et un entier p, compris entre 1 et m, tels que lesdits polynômes Pi contiennent au moins un monôme non nul en xj.yp.

4.  Procédé selon la revendication 3, dans lequel ladite correspondance entre la première valeur x et la seconde valeur y est définie comme suit:

1. 1) - au moyen de la connaissance de deux transformations affines s et t secrètes, s étant une transformation affine de $A^n \to A^n$, c'est-à-dire déterminée par n polynômes de degré total 1 en n variables, et t étant une transformation affine de $A^m \to A^m$, c'est-à-dire déterminée par m polynômes de degré total 1 en m variables, on calcule une fonction y = F(x) de la façon suivante:

1.1) on applique la transformation affine s à x, obtenant une image: a = s (x)

1.2) on applique à l'image a une transformation f donnant une image b telle que: b = f(a), avec:

1.2.1) - si a = (al, a2, ..,ai, .., an) et b = (b1. b2, ..bj,..,bm), les ai et bj étant des éléments de A, il existe une correspondance définie par des polynômes publics multivariables Vi de $A^{n+m} \to A$, non nuls et de degré total petit, satisfaisant chacun à une équation de type:

$$Vi(a1, a2, ..,ai,.., an \; ; \; b1, b2, ..bj,..,bm) = 0 \qquad \textbf{(I)}$$

certains polynômes Vi étant tels qu'il existe un entier j , compris entre 1 et n, et un entier p, compris entre 1 et m, tels que lesdit polynômes Vi contiennent au moins un monôme non nul en aj.bp ;

1.2.2) - la transformation f est de plus choisie telle qu'il existe un algorithme permettant, pour de nombreuses images b, de calculer au moins une image a telle que:

$$f(a) = b.$$

1.3) on applique la transformation affine t à l'image b, obtenant t(b) = y ;

2. 2) de l'existence des équations (I), par changement de variable, on déduit l'existence d'équations (II) définissant lesdits polynômes multivariables Pi;

$$Pi(x1, x2,\ldots,xn \; ; \; Y1, Y2,\ldots,ym) = 0 \qquad \textbf{(II)}$$

certains de ces polynômes étant publics.

5. Procédé selon la revendication 1, dans lequel les polynômes publics multivariables Pi comprennent des polynômes Qj définis de $A^{n+k} \to A$ et de la forme Qj(x1,....,xn ; z1,....,zk) = 0 , et des polynômes (Rp) définis de $A^{m+k'} \to A$ et de la forme Rj(y1,....,ym ; z'1,...., z'k') = 0 , où (z1,....,zk) et z'1,...., z'k' sont des variables intermédiaires effectivement présentes, et j,p,k et k' des entiers.

6. Procédé selon la revendication 1, pour calculer une signature de message, dans lequel la seconde valeur y = (y1,...., ym) représente le message à signer ou une fonction du message à signer et où la première valeur x = (x1,....,xn) représente la signature du message, consistant à vérifier la signature du message en vérifiant que lesdites équations sur les polynômes Pi sont bien satisfaites, étant entendu que, si des variables z1,....,zk interviennent dans ces équations, il s'agit de vérifier qu'il existe bien de telles variables z1,....,zk qui satisferont toutes ces équations.

7. Procédé selon la revendication 1, pour chiffrer un message, dans lequel la première valeur x = (x1,....,xn) représente le message à chiffrer et où la seconde valeur y = (y1,....,ym) représente le message chiffré, procédé consistant à appliquer ladite correspondance à la première valeur x pour obtenir, pour certaines ou toutes les valeurs x, une seconde valeur y, grâce à un ensemble de données publiques incluant lesdits polynômes publics multivariables Pi.

8. Procédé selon la revendication 1, pour effectuer une authentification asymétrique, par une première personne appelée vérifieur, d'une autre personne appelée prouveur, **caractérisé en ce que**:

- le vérifieur envoie au prouveur une valeur constituée par la seconde valeur y ;

- le prouveur renvoie au vérifieur une valeur constituée par la première valeur x ;
- le vérifieur vérifie que lesdites équations sur les polynômes Pi sont bien compatibles avec les première x et seconde y valeurs, étant entendu que, si des variables z1,....,zk interviennent dans ces équations, il s'agit de vérifier qu'il existe bien de telles variables z1,....,zk qui satisferont toutes ces équations.

**9.** Procédé selon la revendication 1, dans lequel:

- la correspondance inclut au moins une transformation affine et secrète s définie par une matrice composée de coefficients à valeur dans ledit anneau A;
- lesdits coefficients de la matrice sont à valeur dans un sous- anneau A' de A de façon que lesdits polynômes publics multivariables Pi aient des coefficients à valeur dans un sous-anneau A" de A.

**10.** Procédé selon la revendication 1, dans lequel chaque monôme desdits polynômes publics multivariables Pi contient au plus une seule variable yi, c'est- à-dire que le degré total en les variables yj des polynômes Pi est 0 ou 1.

**11.** Procédé selon la revendication 1, dans lequel :

- A est un corps fini K ayant un petit nombre d'éléments noté $q = |K|$ ;
- $m = n$ ;
- a et b représentent deux valeurs de deux éléments du corps $F_q^n$ à $q^n$ éléments ;
- la transformation f est une bijection de la forme $f(a) = b = a^h$, où h est un entier public ou secret et premier avec $q'' - 1$.

**12.** Objet portatif comprenant des moyens de traitement de l'information et des moyens de mémorisation, agencé pour mettre en oeuvre une communication cryptographique asymétrique établissant une correspondance entre une première valeur x représentée par n éléments x1, xn d'un anneau A et une seconde valeur y représentée par m éléments yl, yj,.., ym de cet anneau, n et m étant des entiers supérieurs ou égaux à 2, **caractérisé en ce que**:

- ladite correspondance est définie par des polynômes publics multivariables Pi de $A^{n+m+k} \rightarrow A$, de degré total inférieur ou égal à 6, tels que Pi(x1,....,xn ; y1,....,ym ; z1,....,zk) = 0 où z1,....,zk sont d'éventuelles variables intermédiaires et k est un entier:

  - certains desdits polynômes Pi sont tels que la relation Ti(Y1 , Ym) = Si (x1,....,xn) n'est pas vérifiée, où Si est un polynôme de degré total 2 et Ti est un polynôme de degré total 1 ;
  - lesdits moyens de mémorisation ne stockent pas les polynômes publics multivariables Pi ;
  - en ce qui concerne le calcul des polynômes publics multivariables Pi, l'objet portatif est agencé pour fournir seulement des données permettant de calculer, à l'extérieur de l'objet portatif, les polynômes publics multivariables Pi grâce auxquels la seconde valeur y peut être calculée à partir de la première valeur x.

### Claims

**1.** Method for asymmetric cryptographic communication between two individuals A and B belonging to the same communication network, each having a respective device (1,2) for transmission/reception of messages, setting up a mapping between a first value x represented by n elements x1, ..., xn of a ring A and a second value y represented by m elements y1, ..., ym of this ring, n and m being integers greater than or equal to 2, **characterised in that**:

- said mapping is defined by multivariable public polynomials (Pi) of $A^{n+m+k} \rightarrow A$, of total degree less than or equal to 6, such that we obtain equations of type Pi(x1, ..., xn; y1, ..., ym; z1, ..., zk) = 0 where z1, ..., zk) are possible intermediate variables and k is an integer;
- some of said polynomials Pi defining the mapping are such that the relation Ti(y1, ..., ym) = Si(x1, ..., xn) is not satisfied, where Si is a polynomial of total degree 2 and Ti is a polynomial of total degree 1.

**2.** Method according to claim 1, in which some polynomials Pi are not of the form Ti(y1, ..., ym) = Si(x1, ..., xn), where the Si polynomials would be of total degree less than or equal to 6 and the Ti polynomials would be of total degree 1.

**3.** Method according to claim 1, in which the multivariable public polynomials Pi are of the form Pi(x1, ..., xn; y1, ..., ym) = 0, some polynomials Pi being such that there exists an integer j , between 1 and n, and an integer p, between 1 and m, such that said polynomials Pi contain at least one non-null monomial in xj.yp.

4. Method according to claim 3, in which said mapping between the first value x and the second value y is defined as follows:

1. 1) - using the knowledge of two secret affine transformations s and t, s being an affine transformation of $A^n \to A^n$, i.e. determined by n polynomials of total degree 1 in n variables, and t being an affine transformation of $A^m \to A^m$, i.e. determined by m polynomials of total degree 1 in m variables, a function y = F(x) is calculated as follows:

1.1) the affine transformation s is applied to x, obtaining an image: a = s (x)
1.2) a transformation f is applied to the image a, giving an image b such that: b = f(a) , where:

1.2. 1) - if a = (al, a2, ..,ai, .., an) and b = (b1, b2, ..bj,..,bm), the values ai and bj being elements of A, there exist a mapping defined by multivariable public polynomials Vi of $A^{n+m} \to A$, non-null and of small total degree, each satisfying an equation of type:

$$Vi(a1, a2, ..,ai,.., an; b1, b2, ..bj,..,bm) = 0 \qquad (I)$$

some polynomials Vi being such that there exists an integer j, between 1 and n, and an integer p, between 1 and m, such that said polynomials Vi contain at least one non-null monomial in aj.bp;
1.2.2) - in addition, the transformation f is chosen such that there exists an algorithm able, for numerous images b, to calculate at least one image a such that:

$$f(a) = b.$$

1.3) the affine transformation t is applied to the image b, obtaining t(b) =y;

2. 2) from the existence of the equations (I), by change of variable, we deduce the existence of equations (II) defining said multivariable polynomials Pi:

$$Pi(x1, x2, ..., xn; Y1, Y2, ..., ym) \; 0 \qquad (II)$$

some of these polynomials being public.

5. Method according to claim 1, in which the multivariable public polynomials Pi include defined polynomials Qj of $A^{n+k} \to A$ and of the form Qj(x1,....., xn; z1, ..., zk) = 0, and defined polynomials (Rp) of $A^{m+k'} \to A$ and of the form Rj (y1, ..., ym; z'1, ..., z'k') = 0, where (z1, ..., zk) and z'1, ..., z'k' are intermediate variables effectively present and where j, p, k and k' are integers.

6. Method according to claim 1, to calculate a message signature, in which the second value y = (y1, ..., ym) represents the message to be signed or a function of the message to be signed and where the first value x = (x1, ..., xn) represents the message signature, which consists in verifying the message signature by verifying that said equations on the polynomials Pi are satisfied, it being understood that, if variables z1, ..., zk are involved in these equations, a check must be carried out to ensure the existence of such variables z1,...., zk which will satisfy all these equations.

7. Method according to claim 1, to encrypt a message, in which the first value x = (x1, ..., xn) represents the message to be encrypted and where the second value y = (y1, ..., ym) represents the encrypted message, method which consists in applying said mapping to the first value x to obtain, for some or all values x, a second value y, by using a set of public data including said multivariable public polynomials Pi.

8. Method according to claim 1, to perform an asymmetric authentication, by a first person called a verifier of another person called a prover, **characterised in that**:

- the verifier sends to the prover a value formed from the second value y;
- the prover returns to the verifier a value formed from the first value x;
- the verifier verifies that said equations on the polynomials Pi are compatible with the first x and second y values, it being understood that, if variables z1, ..., zk are involved in these equations, a check must be carried out to ensure the existence of such variables z1,...., zk which will satisfy all these equations.

9. Method according to claim 1, in which:

- the mapping includes at least one affine and secret transformation s defined by a matrix composed of value coefficients in said ring A;
- said coefficients in the matrix have values in a sub-ring A' of A such that said multivariable public polynomials Pi have value coefficients in a sub-ring A" of A.

10. Method according to claim 1, in which each monomial of said multivariable public polynomials Pi contain a maximum of one variable yi, i.e. that the total degree in the variables yj of the polynomials Pi is 0 or 1.

11. Method according to claim 1, in which:

- A is a finite body K with a small number of elements written $q = | K 1$;
- $m=n$;
- a and b represent two values of two elements of the body $Fq^n$ with $q^n$ elements;
- the transformation f is a bijection of the form $f(a) = b = a^h$, where h is a public or secret and prime integer with $q^n - 1$.

12. Portable object comprising information processing means and storage means, designed to implement an asymmetric cryptographic communication setting up a mapping between a first value x represented by n elements x1, ..., xn of a ring A and a second value y represented by m elements y1, .., yj, ..., ym of this ring, n and m being integers greater than or equal to 2, **characterised in that**:

- said mapping is defined by multivariable public polynomials Pi of $A^{n+m+k} \rightarrow A$, of total degree less than or equal to 6, such that Pi(x1, ..., xn; y1, ... , ym; z1, ..., zk) = 0 where z1, ..., zk are possible intermediate variables and k is an integer:
- some of said polynomials Pi are such that the relation Ti(Y1, ..., Ym) = Si(x1, ..., xn) is not satisfied, where Si is a polynomial of total degree 2 and Ti is a polynomial of total degree 1;
- said storage means do not store the multivariable public polynomials Pi;
- concerning the calculation of the multivariable public polynomials Pi, the portable object is designed to supply only data which can be used to calculate, outside the portable object, the multivariable public polynomials Pi which can be used to calculate the second value y from the first value x.

**Patentansprüche**

1. Asymmetrisches kryptografisches Kommunikationsverfahren zwischen zwei Individuen A und B desselben Kommunikationsnetzes, die beide jeweils eine Sende-/Empfangsvorrichtung (1,2) für Nachrichten besitzen, wobei das Kommunikationsverfahren eine, Übereinstimmung herstellt zwischen einem ersten Wert x - dargestellt durch n Elemente x1, ..., xn eines Rings A - und einem zweiten Wert y - dargestellt durch m Elemente y1, ..., ym dieses Rings, wobei n und m ganze Zahlen größer gleich 2 sind, **dadurch gekennzeichnet, dass**

- die besagte Übereinstimmung durch multivariable bekannte Polynome (Pi) von A n+m+k $\rightarrow$ A definiert ist, gesamten Grades kleiner gleich 6, sodass man Gleichungen der Art Pi(x1, ..., xn; y1, ..., ym; z1, ...., zk) = 0 erhält, wobei z1, ..., zk eventuelle Zwischenvariablen sind und k eine ganze Zahl ist;
- bestimmte der besagten Polynome Pi, die die Übereinstimmung definieren, derart sind, dass die Relation Ti (y1, ..., ym) = Si(x1,...,xn) nicht geprüft wird, wobei Si ein Polynom gesamten Grades 2 und Ti ein Polynom gesamten Grades 1 ist.

2. Verfahren gemäß Anspruch 1, bei dem bestimmte Polynome Pi nicht in der Form Ti (y1,...,ym) = Si (x1,...,xn) sind, wobei es sich bei den Si um Polynome handeln würde, deren gesamter Grad kleiner gleich 6 ist und wobei es sich bei den Ti um Polynome des gesamten Grades 1 handeln würde.

3. Verfahren gemäß Anspruch 1, bei dem die multivariablen bekannten Polynome Pi in der Form Pi (x1, ..., xn; y1,..., ym) = 0 sind, wobei bestimmte Polynome Pi derart sind, dass eine ganze Zahl j zwischen 1 und n sowie eine ganze Zahl p zwischen 1 und m vorliegt, sodass besagte Polynome Pi mindestens ein Monom enthalten, das in xj.yp nicht null ist.

4. Verfahren gemäß Anspruch 3, bei dem die besagte Übereinstimmung zwischen dem ersten Wert x und dem zweiten Wert y wie folgt definiert ist:

1. 1) durch die Kenntnis von zwei geheimen affinen Transformationen s und t, wobei s eine affine Transformation von $A^n \rightarrow An$ ist, d. h. durch n Polynome des gesamten Grades 1 in n Variablen bestimmt wird, und wobei t eine affine Transformation von $A^m \rightarrow A^m$ ist, d. h. durch m Polynome des gesamten Grades 1 in m Variablen bestimmt wird, berechnet man auf folgende Art und Weise eine Funktion y = F(x):

1. 1) man führt an x die affine Transformation s aus und erhält ein Bild: a = s(x)
1.2) man führt am Bild a eine Transformation f aus und erhält ein Bild b, so dass b = f(a), wobei:

1.2.1) - wenn a = (a1, a2, ..., ai, ..., an) und b = (b1, b2, ..., bj, ..., bm), wobei ai und bj Elemente von A sind, eine Übereinstimmung besteht, die durch multivariable bekannte Polynome Vi von $A^{n+m} \rightarrow A$ definiert ist, die ungleich null sowie kleinen gesamten Grades sind und beide einer Gleichung folgender Art entsprechen:

$$Vi(a1, a2, ..., ai, ... an; b1, b2, ...bj, ..., bm) = 0 \qquad (I)$$

wobei bestimmte Polynome Vi derart sind, dass eine ganze Zahl j zwischen 1 und n besteht sowie eine ganze Zahl p zwischen 1 und m, sodass die besagten Polynome Vi mindestens ein Monom enthalten, das in aj.bp nicht null ist;
1.2.2) die Transformation f wird zudem so gewählt, dass ein Algorithmus vorliegt, mit dem für zahlreiche Bilder b mindestens ein Bild a berechnet werden kann, sodass:

$$f(a) = b$$

1.3) man führt am Bild b die affine Transformation t aus und erhält t(b) = y;

2. 2) ausgehend von den bestehenden Gleichungen (I) leitet man durch Änderung der Variablen das Bestehen von Gleichungen (II) ab, die die multivariablen Polynome Pi definieren:

$$Pi(x1, x2, ..., xn; Y1, Y2, ..., ym) = 0 \qquad (II)$$

wobei bestimmte dieser Polynome bekannt sind.

5. Verfahren gemäß Anspruch 1, bei dem die multivariablen bekannten Polynome Pi von $A^{n+k} \rightarrow A$ definierte Polynome Qj in der Form Qj (x1, ..., xn; z1,..., zk) = 0 umfassen, sowie von $A^{m+k'} \rightarrow A$ definierte Polynome (Rp) und in der Form Rj (y1, ..., ym; z'1, ..., z'k') = 0, wobei (z1, ..., zk) und z'1, ..., z'k' tatsächlich vorhandene Zwischenvariablen und j, p, k und k' ganze Zahlen sind.

6. Verfahren gemäß Anspruch 1 zum Berechnen einer Signatur einer Nachricht, bei dem der zweite Wert y = (y1, ..., ym) die zu signierende Nachricht oder eine Funktion der zu signierenden Nachricht darstellt und bei dem der erste Wert x = (x1, ..., xn) die Signatur der Nachricht darstellt, was darin besteht, die Signatur der Nachricht zu prüfen, indem geprüft wird, ob die besagten Gleichungen über die Polynome Pi erfüllt werden, wobei sich versteht, dass wenn Variablen z1, ... , zk in diesen Gleichungen intervenieren, es darum geht zu prüfen, ob es tatsächlich solche Variablen z1, ..., zk gibt, die all diese Gleichungen erfüllen.

7. Verfahren gemäß Anspruch 1 zum Verschlüsseln einer Nachricht, bei dem der erste Wert x = (x1, ..., xn) die zu verschlüsselnde Nachricht darstellt und der zweite Wert y = (y1, ..., ym) die verschlüsselte Nachricht darstellt, wobei das Verfahren darin besteht, die besagte Übereinstimmung am ersten Wert x anzuwenden, um für bestimmte oder alle Werte x dank einer Reihe von bekannten Daten, zu denen auch die besagten multivariablen bekannten Polynome Pi zählen, einen zweiten Wert y zu erhalten.

8. Verfahren gemäß Anspruch 1 zur Durchführung einer asymmetrischen Authentifizierung durch eine erste als Prüfer bezeichnete Person, einer zweiten als Nachweiser bezeichneten Person, **dadurch gekennzeichnet, dass**:

   - der Prüfer dem Nachweiser einen Wert sendet, der aus dem zweiten Wert y besteht;
   - der Nachweiser dem Prüfer einen Wert zurücksendet, der aus dem ersten Wert x besteht;
   - der Prüfer prüft, ob die besagten Gleichungen über die Polynome Pi tatsächlich mit dem ersten x und zweiten y Wert kompatibel sind, wobei sich versteht, dass wenn Variablen z1, ..., zk in diesen Gleichungen intervenieren, es darum geht zu prüfen, dass es tatsächlich solche Variablen z1, ..., zk gibt, die all diese Gleichungen erfüllen.

9. Verfahren gemäß Anspruch 1, bei dem

   - die Übereinstimmung mindestens eine affine und geheime Transformation s einschließt, die durch eine aus Wertekoeffizienten im besagten Ring A bestehende Matrix definiert wird;
   - die besagten Koeffizienten der Matrix mit einem Wert in einem Unterring A' von A sind, sodass die besagten multivariablen bekannten Polynome Pi Wertekoeffizienten in einem Unterring A" von A haben.

10. Verfahren gemäß Anspruch 1, bei dem jedes Monom der besagten multivariablen bekannten Polynome Pi höchstens eine einzige Variable yi enthält, d. h. der gesamte Grad in den Variablen yi der Polynome Pi ist 0 oder 1.

11. Verfahren gemäß Anspruch 1, bei dem:

   - A ein abgeschlossener Körper K mit einer geringen Anzahl von Elementen ist, benannt als $q = |K|$ ;
   - m=n;
   - a und b zwei Werte von zwei Elementen des Körpers $Fq^n$ mit $q^n$ Elementen darstellen;
   - die Transformation f eine Bijektion der Form $f(a) = b = a^h$ ist, wobei h eine bekannte oder geheime ganze Zahl und mit $q^n-1$ an erster Stelle ist.

12. Tragbares Objekt mit Datenverarbeitungsmitteln und Speichermitteln, das angebracht wird, um eine asymmetrische kryptografische Kommunikation herzustellen und dabei eine Übereinstimmung zwischen einem ersten Wert x - dargestellt durch n Elemente x1, ..., xn eines Rings A - und einem zweiten Wert y - dargestellt durch m Elemente y1, ..., yj, ..., ym dieses Rings herzustellen, wobei n und m ganze Zahlen größer gleich 2 sind, **dadurch gekennzeichnet, dass**:

   - die besagte Übereinstimmung durch multivariable bekannte Polynome Pi von $A^{n+m+k} \rightarrow A$ gesamten Grades kleiner gleich 6 derart definiert wird, dass Pi(xl,..., xn; yl,...,ym; z1,..., zk) = 0, wobei z1,...., zk eventuelle Zwischenvariablen sind und k eine ganze Zahl ist:

     - bestimmte der besagten Polynome Pi derart sind, dass die Relation Ti(Y1, , Ym) = Si (x1, ...,xn) nicht geprüft wird, wobei Si ein Polynom gesamten Grades 2 und Ti ein Polynom gesamten Grades 1 ist;
     - die besagten Speichermittel die multivariablen bekannten Polynome Pi nicht speichern;

hinsichtlich der Berechnung der multivariablen bekannten Polynome Pi das tragbare Objekt angebracht wird, um nur Daten bereitzustellen, mit denen außerhalb des tragbaren Objekts die multivariablen bekannten Polynome Pi berechnet werden können, mit denen der zweite Wert y ausgehend vom ersten Wert x berechnet werden kann.

$$x_1, x_2, \ldots\ldots x_n$$

$$\downarrow s$$

$$a = (a_1, a_2, \ldots\ldots a_n)$$

$$\downarrow f$$

$$b = a^{q^\theta + q^\varphi - 1}$$

$$\downarrow t$$

$$y_1, y_2, \ldots\ldots y_n \longleftarrow P_1, P_2, \ldots P_n$$

## Fig.1

## Fig.2